# EUROPÄISCHE PATENTSCHRIFT

(11) **EP 0 906 534 B1**
(45) Veröffentlichungstag und Bekanntmachung des Hinweises auf die Patenterteilung: **23.05.2001**
(21) Anmeldenummer: 97925002.4
(22) Anmeldetag: 28.05.1997
(51) Int. Cl.: F16L 37/084

(54) **LÖSBARE STECKVERBINDUNG MIT MONTAGEANZEIGE**
RELEASABLE PLUG CONNECTOR WITH FITTING INDICATOR
CONNECTEUR AMOVIBLE AVEC INDICATEUR DE MONTAGE

(30) Priorität: 20.06.1996 DE 19624524
(43) Veröffentlichungstag der Anmeldung: 07.04.1999
(73) Patentinhaber: A. Raymond & Cie, 38028 Grenoble (FR)
(72) Erfinder: TREDE, Michael, F-68170 Rixheim (FR); HENLIN, Jean-Martin, F-68640 Waldighoffen (FR)
(74) Vertreter: Kirchgaesser, Johannes, Dipl.-Ing.
(86) Internationale Anmeldenummer: EP9702751
(87) Internationale Veröffentlichungsnummer: WO9748936

(56) Entgegenhaltungen:
- EP-A- 0 547 489
- EP-A- 0 605 801
- US-A- 4 913 467
- US-A- 5 520 420

## Beschreibung

Die Erfindung bezieht sich auf eine lösbare Steckverbindung mit Montageanzeige zum Verbinden von Flüssigkeitsleitungen entsprechend dem Oberbegriff des Anspruchs 1 .

Beim Zusammenbringen von Einsteckteil und Steckgehäuse kommt es besonders darauf an, daß die Halterippe auch sicher am Halteelement einrastet, so daß die Verbindungsstelle absolut sicher gehalten wird. Zwar verursacht das Einrasten der Halterippe an den auffederbaren Rastkanten ein Klick-Geräusch, welches dem Monteur die Herstellung der Verbindung bestätigt, doch ist dieses Geräusch je nach Lärmpegel am Arbeitsplatz nicht mit Sicherheit auszumachen, so daß eine absolute. Gewähr für die Verrastung des Einsteckteils nicht gegeben ist.

Um sich bei der Montage vom Einrasten der Halterippe zu vergewissern, hat der Monteur zwar die Möglichkeit, an der montierten Steckverbindung zu ziehen, um zu sehen, ob sie hält. Doch gibt es keine Gewähr, daß der Monteur auch diese Halteprobe durchgeführt hat, da man der Steckverbindung nicht ansieht, ob diese Kontrolle auch schon durchgeführt worden ist. Der Nachkontrolle bleibt somit nichts anderes übrig, als nochmals an der Steckverbindung zu ziehen.

Um diese Kontrolle zu verbessern, ist beim Stand der Technik nach **EP 0 547 489 A1** ein vor der Einstecköffnung des Gehäuses positionierbares Anzeigeteil vorgesehen, welches aus zwei im Abstand voneinander angeordneten Stützringen und zwei die Stützringe miteinander verbindenden Stegen besteht. Während der eine Stützring an der vorderen Gehäusewand bzw. deren Stirnseite anliegt, ragt der zweite Stützring in den Gehäuseinnenraum hinein und wird durch die Verbindungsstege in einer Warteposition direkt hinter den Rastkanten des Halteelements gehalten, und zwar in einem solchen Abstand, daß die Halterippe des Einsteckteils kurz vor dem Einrasten an den Rastkanten gegen den Stützring drückt.

Die Verbindungsstege sind hierbei mit dem vor dem Gehäuseeingang anliegenden Stützring, dem sogenannten indikatorabschnitt, über trennbare Schwachstellen verbunden, welche beim weiteren Eindringen des Einsteckteils in den Gehäuseinnenraum spätestens beim Einrasten der Rastkanten hinter der Halterippe sich lösen. Das Lösen des Indikatorabschnitts soll zur Anzeige einer ordnungsgemäßen Kopplung zwischen den Einsteckteil und dem Steckergehäuse dienen, wobei ein vom Indikatorteil radial abstehendes Laschenteil vorgesehen ist, mit welchem das Indikatorteil erfaßt und nach dem Lösen von den Verbindungsstegen entfernt werden kann.

Das Fehlen der Lasche mit dem zugehörigen Indikatorteil ist somit ein sicherer Beweis, daß die Steckverbindung geschlossen ist; andernfalls hätte der Monteur die Lasche nicht entfernen können. Doch erfordert auch diese Art der Kontrolle einen zusätzlichen Arbeitsaufwand, so daß mit dem kostspieligen Anzeigeteil gegenüber dem Ziehen an dem montierten Einsteckteil im Grunde nichts an Arbeitszeit eingespart worden ist.

Aufgabe der Erfindung ist es, die vorgenannte Steckverbindung so zu gestalten bzw. zu ergänzen, daß beim Zusammenstecken ohne weitere manuellen Maßnahmen ein optisch gut erkennbarer Beweis für die sichere Verbindung gegeben ist.

Diese Aufgabe wird nach den kennzeichnenden Merkmalen des Anspruchs 1 dadurch gelöst, daß der andere, von der Gehäusewand abgekehrte Stützring am Einsteckteil an einem Flansch hinter der Halterippe abstützbar ist und die Stege an beiden Stützringen elastisch auffederbar angeformt und untereinander mit nach außen gewölbten Brückenstegen verbunden sind, welche beim Eindrücken des Einsteckteils nach außen zusammenklappen und dabei die Gehäusewand sichtbar überragen.

Die elastischen Federstege bieten hierbei noch den weiteren Vorteil, daß bei nicht vollständiger Montage aufgrund der Rückstellkräfte in den Stegen das Steckgehäuse vom Einsteckteil weggedrückt wird, so daß der Monteur sofort informiert ist und das Steckgehäuse nochmals fest aufdrücken kann.

Um das Positionieren des Anzeigeteils zwischen dem Einsteckteil und dem Steckgehäuse zu erleichtern, sind zwei Möglichkeiten der Vormontage vorgesehen.

Bei der Ausführungsform nach Anspruch 2 sind am Außenrand des mit der Gehäusewand verbindbaren Stützringes zwei achsparallel verlaufende Haltestege angeformt, wobei die vordere Gehäusewand im Einführbereich entsprechende Haltelaschen aufweist, in welche die Haltestege einführbar und mittels radial nach außen abstehender Rastnasen einrastbar sind. Auf diese Weise läßt sich das Anzeigeteil mit dem Steckgehäuse problemlos beim Hersteller verbinden und der Kunde kann die vormontierte Einheit sofort mit dem Einsteckteil zusammenführen.

Bei der anderen Ausführungsform nach Anspruch 3 besitzt der sich am Flansch des Einsteckteils abstützende Stützring mindestens zwei an dessen Innenrand auffederbar angeformte, in Richtung auf den anderen Stützring weisende Stützstege, deren Länge dem Abstand zwischen dem Flansch und der Halterippe entspricht und deren Innendurchmesser im Bereich vor der Stützkante etwas kleiner ist als der Rohrdurchmesser des Einsteckteils. Dadurch läßt sich das Anzeigeteil bequem auf dem Einsteckteil vormontieren und dann beim Kunden mit dem Steckgehäuse zusammenführen. Ein weiterer Vorteil dieser Ausführungsform besteht darin, daß die Baulänge des Einsteckteils nicht verändert wird, weil das Anzeigeteil kürzer ist als die Gesamtlänge des rohrförmigen Teils.

Die in den Ansprüchen 4 bis 6 angeführten Merkmale beziehen sich auf eine zweckmäßige Ausformung und Dimensionierung der im Anspruch 3 erwähnten Stützstege, damit diese nach dem Aufstecken des Anzeigeteils auf das Einsteckteil vor der Halterippe eng am Rohrstück anliegen ( Ansprüche 4 und 6 ) und das Halteelement des Steckgehäuses genügend Platz hat, um die Halterippe zu hintergreifen ( Anspruch 5 ). Schließlich ist nach Anspruch 7 noch vorgesehen, daß die nach außen gewölbten Brückenstege schmaler und damit flexibler sind als die an den Stützringen angeformten Federstege. Dadurch wird erreicht, daß beim Zusammenklappen der Federstege die gewölbten Brückenstege sich ohne großen Kraftaufwand zu einem Kreis zusammen schließen.

In der Zeichnung sind zwei Ausführungsbeispiele der Erfindung dargestellt und sollen nachfolgend näher beschrieben werden. Es zeigt
- Fig. 1: die Hauptelemente der Steckverbindung mit einem am Steckgehäuse vormontierbaren Anzeigeteil vor dem Zusammenbau,
- Fig. 2: das Steckgehäuse mit montiertem Anzeigeteil in Seitenansicht,
- Fig. 3: das Steckgehäuse mit Anzeigeteil in Draufsicht von rechts,
- Fig. 4: das Steckgehäuse mit montiertem Anzeigeteil in einer um 90° gedrehten Seitenansicht mit zugehörigem Einsteckteil vor dem Eindrücken,
- Fig. 5: das gleiche Steckgehäuse mit eingedrückten Einsteckteil und zusammengeklapptem Anzeigeteil,
- Fig. 6: eine andere am Einsteckteil vormontierbare Ausführungsform des Anzeigeteils in Seitenansicht,
- Fig. 7: das gleiche Anzeigeteil in einer Draufsicht in Richtung des Pfeiles A,
- Fig.8: einen Längsschnitt durch das Anzeigeteil gemäß Linie VIII-VIII in Figur 6,
- Fig. 9: das Einsteckteil mit Anzeigeteil vor dem Aufdrücken,
- Fig. 10: das Einsteckteil mit vormontiertem Anzeigeteil vor dem Eindrücken in das Steckaehäuse und
- Fig. 11: das gleiche Montagebild mit eingedrücktem Einsteckteil und zusammengeklapptem Anzeigeteil.

Die in den Figuren dargestellte Steckverbindung dient zur lösbaren Verbindung von Flüssigkeitsleitungen, insbesondere von Kraftstoffleitungen im Kraftfahrzeugbau. Sie besteht generell aus einem zylindrischen Steckgehäuse **1,** einem rohrförmigen Einsteckteil **2** mit einer umlaufenden Halterippe **3** sowie einem mit dem Steckgehäuse **1** verbindbaren Anzeigeteil **4** bzw. **20.**

Das zylindrische Steckgehäuse **1** weist in seinem Einsteckbereich einen Aufnahmeraum **5** für ein separates Halteelement **6** auf, welches von außen quer zur Gehäuseachse eingeführt wird und mit radial nach innen gerichteten Rastkanten **7** versehen ist, welche dazu bestimmt sind, die Halterippe **3** nach dem Eindrücken des Einsteckteils **2** in das Steckgehäuse **1** zu hintergreifen und in Schließposition zu halten (vgl. EP 0 605 801 B1).

Zum Beweis der korrekten Montage ist ferner ein zwischen Einsteckteil **2** und Steckgehäuse **1** positionierbares Anzeigeteil **4** vorgesehen, welches aus zwei im Abstand voneinander angeordneten Stützringen **8** bzw. **22** und **9** bzw. **21** und zwei die Stützringe miteinander verbindenden Federstegen **10** besteht, die an den einander gegenüberliegenden Stirnflächen der Stützringe elastisch auffederbar angeformt und untereinander mit nach außen gewölbten Brückenstegen **11** verbunden sind.

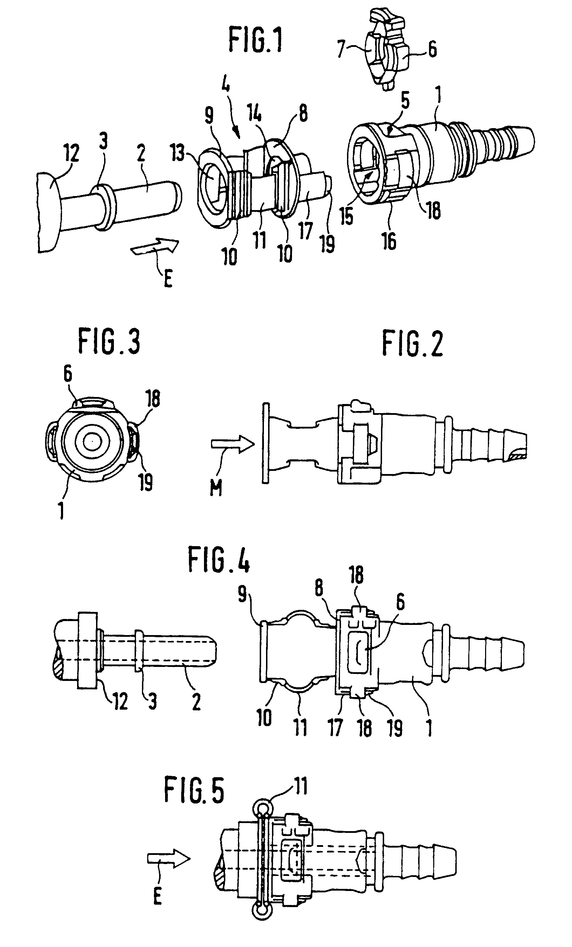

Beim Ausführungsbeispiel nach **Figur 1 bis 5** befindet sich der in der Zeichnung rechts dargestellte Stützring **8** vor der Öffnung **15** des Steckgehäuses **1** und kann zwecks Vormontage in noch zu beschreibender Weise mit letzterem verbunden werden. Der andere Stützring **9** stützt sich am Einsteckteil **2** an einem Flansch **12** hinter der Halterippe **3** ab, wenn das Einsteckteil **2** durch die beiden Ringbohrungen **13** und **14** der Stützringe **8** und **9** hindurch in die Öffnung **15** des Steckgehäuses **1** in Richtung des Pfeiles "**E**" eingedrückt wird. Dabei werden, wie aus **Fig. 5** ersichtlich, die Federstege **10** zusammengeklappt und die Brückenstege **11** nach außen gewölbt, so daß diese Brückenstege **11** die Außenwand **16** des Steckgehäuses **1** sichtbar überragen.

Um das Anzeigeteil **4** bei der vorgesehenen Verbindung mit dem Steckgehäuse **1** für den bevorstehenden Einsatz sicher zu halten, sind am Außenrand des Stützringes **8** zwei achsparallel verlaufende Haltestege **17** angeformt, welche beim Zusammenbau in Richtung des Pfeiles "**M**" in entsprechende Haltetaschen **18** an der Außenwand **16** des Steckgehäuses **1** einführbar und mittels radial nach außen abstehender Rastnasen **19** in diesen Haltetaschen **18** einrastbar sind.

Selbstverständlich sind neben dieser bevorzugten Verankerungart der Haltestege **17** in den Haltetaschen **18** auch andere Verbindungsarten denkbar, welche geeignet sind, das Anzeigeteil **4** vor der Öffnung **15** des Steckgehäuses **1** für den Einsatz bereit zu halten.

Um eine bessere Flexibilität beim Zusammendrücken der Stützringe **8** und **9** zu erreichen, sind die nach außen gewölbten Brückenstege **11** bei gleicher Materialdicke schmaler ausgebildet als die an den Stützringen **8** und **9** angeformten Federstege **10.**

Das Anzeigeteil **4** bietet neben der Montageanzeige noch den weiteren Vorteil, daß das Einsteckteil **2,** wenn es nicht voll in das Steckgehäuse **1** eingesteckt und somit auch nicht hinter der Haltefeder **6** verrastet ist, infolge der Rückstellkraft der Federstege **10** und der Brückenstege **11** deutlich sichtbar aus dem Steckgehäuse **1** herausgedrückt wird. Damit erhält der Monteur einen eindeutigen Hinweis, daß er das Einsteckteil **2** nochmals fest eindrücken muß.

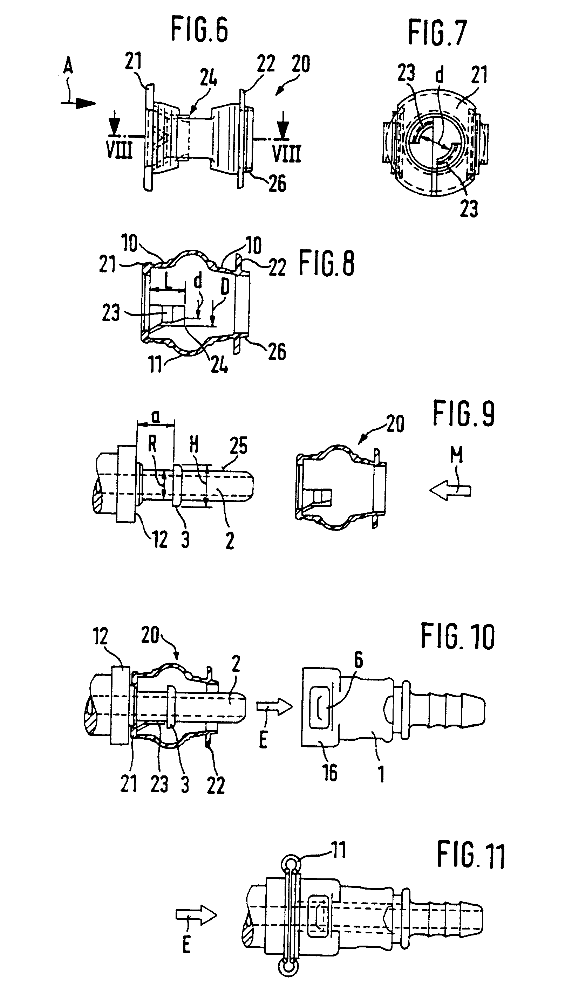

In den Figuren 6 bis 8 ist eine andere Ausführungsform des Anzeigeteils dargestellt, welches auf dem Einsteckteil **2** vormontiert ( Figur 9 ) und dann mit diesem zusammen in die Einstecköffnung **15** eingedrückt wird.

Dieses Anzeigeteil **20** besteht ebenfalls aus zwei Stützringen **21** und **22,** die - genau wie das vorgenannte Anzeigeteil 4 - über die gleichen Federstege **10** und Brückenstege **11** untereinander verbunden sind.

Der sich am Flansch **12** des Einsteckteils **2** abstützende Stützring **21** besitzt zwei an dessen Innenrand auffederbar angeformte, in Richtung auf den anderen Stützring **22** weisende Stützstege **23,** welche beim Aufdrücken des Anzeigeteils **20** auf das Einsteckteil **2** zunächst auseinandergebogen werden und nach Überfahren der Halterippe **3** wieder zusammenfedern und dabei mit den Stützkanten **24** hinter der Halterippe **3** einrasten. Zu diesem Zweck besitzen die Stützstege **23** eine Länge **L**, die genau dem Abstand a zwischen Flansch **12** und Halterippe **3** entspricht. Um eine satte Anlage am Rohrmantel **25** des Einsteckteils **2** zu gewährleisten, ist außerdem vorgesehen, daß der Innendurchmesser im Bereich vor der Stützkante **24** etwas kleiner ist als der Außendurchmesser **R** des Einsteckteils **2.**

Zum sicheren Einrasten des Einsteckteils **2** ist ferner vorgesehen, daß der Außendurchmesser **D** der Stützstege **23** im Bereich vor der Stützkante **24** kleiner ist als der Außendurchmesser **H** der Halterippe **3**, so daß zum Hintergreifen der Rastkanten **7** des Halteelements **6** hinter der Halterippe **3** noch genügend Anlagefläche bleibt.

Da der Innenrand des Stützrings **21** im Durchmesser etwas größer sein muß als der Außendurchmesser **H** der Halterippe **3,** sind die Stützstege **23** so ausgebildet, daß diese vom Innenrand des Stützrings **21** aus zunächst konisch zusammenlaufen und etwa ab der halben Länge **L** der Stützstege **23** parallel zum Rohrmantel **25** weiterlaufen.

Ferner ist zur optimalen Anlage der Stützstege **23** am Rohrmantel **25** der Bereich vor der Stützkante **24** so ausgebildet, daß die Innenwand des Stützstegs **23** abermals etwas konisch nach innen läuft.

Der Stützring **22** weist an seinem Innenrand zweckmäßigerweise eine zum Steckgehäuse **1** weisende Zentrierhülse **26** auf, welche beim Einführen des Einsteckteils **2** in das Steckgehäuse **1** genau in die Einstecköffnung **15** hineinpaßt.

## Patentansprüche

1. Lösbare Steckverbindung mit Montageanzeige zum Verbinden von Flüssigkeitsleitungen, bestehend aus einem rohrförmigen Einsteckteil ( **2** ) mit einer umlaufenden Halterippe ( **3** ), einem zylindrischen Steckgehäuse ( **1** ) mit einem Aufnahmeraum ( **5** ) für ein separates Halteelement ( **6** ) mit radial nach innen gerichteten, elastisch auffederbaren Rastkanten ( **7** ) zum Hintergreifen der Halterippe ( **3** ) nach dem Eindrücken des Einsteckteils ( **2** ) und aus einem vor der Einstecköffnung ( **15** ) des Steckgehäuses ( **1** ) positionierbaren Anzeigeteil ( **4,20** ), welches aus zwei im Abstand voneinander angeordneten Stützringen ( **8,22** ) und ( **9,21** ) und mindestens zwei die Stützringe ( **8,22** ) und ( **9,21** ) miteinander verbindenden Stegen ( **10** ) besteht, wobei der eine Stützring ( **8,22** ) mit der vorderen Gehäusewand ( **16** ) verbindbar ist, dadurch **gekennzeichnet**, daß der andere, von der Gehäusewand ( 16) abgekehrte Stützring ( **9,21** ) am Einsteckteil ( **2** ) an einem Flansch ( **12** ) hinter der Halterippe ( **3** ) abstützbar ist und die Stege ( **10** ) an beiden Stützringen ( **8,22** ) und ( **9,21** ) elastisch auffederbar angeformt und untereinander mit nach außen gewölbten Brückenstegen ( **11** ) verbunden sind, die beim Eindrücken des Einsteckteils ( **2** ) nach außen zusammenklappen und dabei die Gehäusewand ( **16** ) sichtbar überragen.

2. Lösbare Steckverbindung nach Anspruch 1, dadurch gekennzeichnet, daß am Außenrand des mit der Gehäusewand verbindbaren Stützringes ( **8** ) zwei achsparallel verlaufende Haltestege ( **17** ) angeformt sind und die vordere Gehäusewand ( **16** ) im Einführbereich entsprechende Haltetaschen ( **18** ) aufweist, in welche die Haltestege ( **17** ) einführbar und mittels radial nach außen abstehender Rastnasen ( **19** ) einrastbar sind.

3. Lösbare Steckverbindung nach Anspruch 1, dadurch gekennzeichnet, daß der sich am Flansch ( **12** ) des Einsteckteils ( **2** ) abstützende Stützring ( **21** ) mindestens zwei an dessen Innenrand auffederbar angeformte, in Richtung auf den anderen Stützring ( **22** ) weisende Stützstege ( **23** ) besitzt, deren Länge ( **L** ) dem Abstand ( **a** ) zwischen dem Flansch ( **12** ) und der Halterippe ( **3** ) entspricht und deren Innendurchmesser ( **d** ) im Bereich vor der Stützkante ( **24** ) etwas kleiner ist als der Außendurchmesser ( **R** ) des Einsteckteils ( **2** ).

4. Lösbare Steckverbindung nach Anspruch 3, dadurch gekennzeichnet, daß der Außendurchmesser ( **D** ) der Stützstege ( **23** ) im Bereich vor der Stützkante ( **21** ) kleiner ist als der Außendurchmesser ( **H** ) der Halterippe ( **3** ).

5. Lösbare Steckverbindung nach Anspruch 4, dadurch gekennzeichnet, daß die Stützstege ( **23** ) vom Innenrand des Stützrings ( **21** ) aus zunächst konisch zusammenlaufen und etwa ab der halben Steglänge ( **L** ) parallel zum Rohrmantel ( **25** ) weiterlaufen.

6. Lösbare Steckverbindung nach Anspruch 4 oder 5 , dadurch gekennzeichnet, daß die Innenwand der Stützstege ( **23** ) im Bereich vor der Stützkante ( **21** ) abermals konisch nach innen läuft.

7. Lösbare Steckverbindung nach einem der vorhergehenden Ansprüche 1 bis 6, dadurch gekennzeichnet, daß die nach außen gewölbten Brückenstege (**11** ) schmaler und damit flexibler sind als die an den Stützringen ( **8,21** ) und ( **9,22**) angeformten Federstege (**10**).

## Claims

1. A releasable plug connection with assembly indication for connecting fluid lines, comprising a tubular plug-in member (2) with a holding rib (3) extending therearound, a cylindrical plug housing (1) with a receiving space (5) for a separate holding element (6) with radially inwardly directed latching edges (7) which can be elastically sprung open for engaging behind the holding rib (3) after the plug-in member (2) has been pressed in, and an indicator member (4, 20) which can be positioned in front of the plug-in opening (15) of the plug housing (1) and which comprises two mutually spaced support rings (8, 22) and (9, 21) and at least two legs (10) which connect the support rings (8, 22) and (9, 21) together, wherein the one support ring (8, 22) can be connected to the front housing wall (16), characterised in that the other support ring (9, 21) which is remote from the housing wall (16) can be supported on the plug-in member (2) at a flange (12) behind the holding rib (3) and the legs (10) are formed on both support rings (8, 22) and (9, 21) in such a way that they can be elastically sprung open and are connected together with outwardly curved bridge leg portions (11) which when the plug-in member (2) is pressed in fold together outwardly and in so doing project visibly beyond the housing wall (16).

2. A releasable plug connection according to claim 1 characterised in that two holding legs (17) which extend parallel to the axis are formed at the outside edge of the support ring (8) which can be connected to the housing wall and the front housing wall (16) has in the introduction region corresponding holding pockets (18) into which the holding legs (17) can be introduced and latched therein by means of radially outwardly projecting latching protrusions (19).

3. A releasable plug connection according to claim 1 characterised in that the support ring (21) which is supported at the flange (12) of the plug-in member (2) has at least two support legs (23) which are formed at the inside edge of the support ring in such a way that they can be sprung open and which face in a direction towards the other support ring (22) and the length (L) of which corresponds to the spacing (a) between the flange (12) and the holding ring (3) and the inside diameter (d) of which is somewhat smaller in the region in front of the support edge (24) than the outside diameter (R) of the plug-in member (2).

4. A releasable plug connection according to claim 3 characterised in that the outside diameter (D) of the support legs (23) is smaller in the region in front of the support edge (21) than the outside diameter (H) of the holding rib (3).

5. A releasable plug connection according to claim 4 characterised in that the support legs (23) initially converge conically from the inside edge of the support ring (21) and approximately from half the leg length (L) then extend parallel to the peripheral tube surface (25).

6. A releasable plug connection according to claim 4 or claim 5 characterised in that the inside wall of the support legs (23) once again extends conically inwardly in the region in front of the support edge (21).

7. A releasable plug connection according to one of preceding claims 1 to 6 characterised in that the outwardly curved bridge leg portions (11) are narrower and thus more flexible than the spring legs (10) which are formed on the support rings (8, 21) and (9, 22).

## Revendications

1. Raccord rapide détachable muni d'un indicateur de montage pour le raccordement de conduites de liquide, se composant d'un élément mâle embrochable (2) muni d'une nervure de retenue périphérique (3), d'un logement d'emmanchement cylindrique (1) comportant un logement de réception (5) pour l'insertion d'un organe de retenue séparé (6), qui est muni d'arêtes d'accrochage (7) capables de céder par déformation élastique, orientées dans le sens radial vers l'intérieur, qui sont destinées à venir cramponner par derrière la nervure de retenue (3), après que l'élément mâle embrochable (2) a été poussé en position d'accouplement, et d'un élément indicateur (4, 20) destiné à être placé devant l'ouverture d'emmanchement (15) du logement d'emmanchement (1), qui se compose de deux bagues d'appui (8, 22) et (9, 21) et d'au moins deux barrettes entretoises (10) reliant respectivement entre elles les bagues d'appui (8, 22) et (9, 21), une (8, 22) de ces bagues d'appui étant en l'occurrence destinée à être raccordée à la paroi antérieure (16) du logement d'emmanchement, caractérisé en ce que l'autre bague d'appui (9, 21), disposée à l'opposé de la paroi antérieure (16) du logement d'emmanchement, est destinée à prendre appui, sur l'élément mâle embrochable (2), sur une bride (12) se trouvant derrière la nervure de retenue (3) et en ce que les barrettes entretoises de liaison (10) sont réalisées solidaires par moulage des deux bagues d'appui (8, 22) et (9, 21), avec la possibilité de céder par déformation élastique, et sont reliées entre elles par des pontets cintrés vers l'extérieur (11) qui, lorsqu'on pousse l'élément mâle embrochable (2) en position d'emmanchement, se rabattent vers l'extérieur l'un contre l'autre et, ce faisant, font saillie de manière bien visible par rapport à la paroi (16) du logement d'emmanchement.

2. Raccord rapide détachable selon la revendication 1, caractérisé en ce que deux nervures de retenue (17), disposées parallèlement à l'axe du raccord, sont réalisées solidaires par moulage du bord extérieur de la bague d'appui (8) destinée à être raccordée à la paroi du logement d'emmanchement et en ce que la paroi antérieure (16) du logement d'emmanchement comporte, dans la zone d'introduction, des réceptacles de retenue (18) correspondants, dans lesquels les nervures de retenue (17) sont destinées à être introduites et à s'accrocher en prise d'encastrement par l'intermédiaire d'ergots d'accrochage (19) faisant saillie dans le plan radial vers l'extérieur.

3. Raccord rapide détachable selon la revendication 1, caractérisé en ce que la bague d'appui (21) prenant appui sur la bride (12) de l'élément mâle embrochable (2) comporte au moins deux nervures d'appui (23) orientées en direction de l'autre bague d'appui (22), réalisées solidaires par moulage de sa paroi intérieure, avec la possibilité de céder par déformation élastique, dont la longueur (L) correspond à l'intervalle d'écartement (a) entre la bride (12) et la nervure de retenue (3) et dont le diamètre intérieur (d) est, dans la zone se trouvant en amont de l'arête d'appui (24), légèrement plus petit que le diamètre extérieur (R) de l'élément mâle embrochable (2)

4. Raccord rapide détachable selon la revendication 3, caractérisé en ce que le diamètre extérieur (D) des nervures d'appui (23) est, dans la zone se trouvant devant l'arête d'appui (21), plus petit que le diamètre extérieur (H) de la nervure de retenue (3).

5. Raccord rapide détachable selon la revendication 4, caractérisé en ce que les nervures d'appui (23), partant du bord intérieur de la bague d'appui (21) commencent tout d'abord par ce rapprocher suivant un tracé conique qui, sensiblement à partir de la moitié de la longueur (L) des nervures d'appui, prend une orientation parallèle à la périphérie tubulaire (25).

6. Raccord rapide détachable selon la revendication 4 ou 5, caractérisé en ce que la paroi intérieure des nervures d'appui (23), dans la partie en amont de l'arête d'appui (24) s'étend vers l'intérieur à nouveau suivant un tracé conique.

7. Raccord rapide détachable selon l'une des revendications 1 à 6 qui précèdent, caractérisé en ce que les pontets cintrés vers l'extérieur (11) sont plus étroits, et donc plus souples, que les barrettes entretoises élastiques (10) réalisées solidaires par moulage des bagues d'appui (8, 21) et (9, 22).
